# EUROPEAN PATENT SPECIFICATION

(11) **EP 0 747 902 B1**
(45) Date of publication and mention of the grant of the patent: **02.01.2002**
(21) Application number: 96303534.0
(22) Date of filing: 17.05.1996
(51) Int. Cl.: G11B 25/06, G11B 15/32

(54) **Tape cassette loading mechanism in magnetic recording/reproducing apparatus**
Bandkassettenlademechanismus für Magnetaufzeichnungs-/-wiedergabegerät
Mécanisme de chargement de cassette à bande d'un appareil d'enregistrement/reproduction magnétique

(30) Priority: 18.05.1995 KR 9512462
(43) Date of publication of application: 11.12.1996
(73) Proprietor: SAMSUNG ELECTRONICS CO., LTD., Suwon-city, Kyungki-do 441-373 (KR)
(72) Inventor: Lee, Min-su, Uiwang-city, Kyungki-do (KR)
(74) Representative: Chugg, David John

(56) References cited:
- EP-A- 0 312 397
- EP-A- 0 463 786
- DE-A- 3 234 854
- US-A- 4 903 149

## Description

The present invention relates to a tape cassette loading mechanism in a magnetic recording/reproducing apparatus such as a VCR, a CAMCORDER, and a digital-video cassette recorder (D-VCR), and more particularly, to a tape cassette loading mechanism in a magnetic recording/reproducing apparatus which moves reel tables so that at least different-sized tape cassettes are selectively and stably loaded on the different-sized reel tables.

Generally, a loading pin for supporting a tape cassette to be stably loaded on a reel table is installed in a deck mechanism in a magnetic recording/reproducing apparatus such as a VCR, a CAMCORDER, and a digital-video cassette recorder (D-VCR).

Meanwhile, a mechanism has recently been proposed whereby a reel table is moved so that different-sized tape cassettes are selectively used. This mechanism which can selectively load different-sized tape cassettes requires supporting means for stably and selectively supporting the different-sized tape cassettes.

DE 3234854 discloses a tape deck mechanism having a pair of shafts on which rotating arms are mounted, those rotating arms carrying reel tables for receiving a tape cassette, the distances between the reel tables being adjustable by rotating the rotating arms.

The present invention is contrived in accordance with the above requirement, and it is an aim of embodiments of the present invention to provide a tape cassette loading mechanism in a magnetic recording/reproducing apparatus, which supports tape cassettes so that different-sized tape cassettes can be safely and selectively seated on reel tables.

According to a first aspect of the present invention, there is provided a tape cassette loading mechanism in a magnetic recording/reproducing apparatus, comprising: a first deck having first and second fixed pins mounted thereon, wherein said pins are separated by a predetermined distance; and a second deck which includes: a head drum having a magnetic head and a guiding device for guiding a magnetic tape; and a pair of driving arms rotatably combined with said first and second fixed pins each having geared portions that are engaged to one another; the mechanism being characterised in that said first deck includes first and second arc-shaped holes, said second deck has third and fourth arc-shaped holes corresponding to the first and second holes formed therein and there is provided a pair of rotating arms rotatably installed on said first and second fixed pins, respectively, for supporting reel tables on which different-sized tape cassettes are respectively loaded; a driving motor connected to one of said geared portions of said driving arms; connecting means for connecting said driving arms and rotating arms to transmit the power from said driving motor to said respective rotating arms via said driving arms; and supporting means for supporting different-sized tape cassettes loaded on the reel tables.

Here, it is preferable that motors for rotating the respective reel tables are installed on each of the rotating arms, respectively.

The connecting means preferably includes: cavities respectively formed on the bottom of the driving arms; indented portions formed on the top portions of the rotating arms corresponding to the cavities; and coil springs disposed between the cavities and the indented portions, respectively.
Preferably, the device further comprises preventing means for preventing excess rotation of said rotating arms. Said preventing means may include: protrusions formed on said rotating arms respectively; and stoppers formed on said first deck.

The supporting means preferably includes first and second loading pins fixed on the rotating arms, respectively, and third and fourth loading pins respectively on sides of the second deck such that the first and second and third and fourth loading pins support different-sized tape cassettes, respectively.

The first and second loading pins are preferably rotated with the rotating arms and support a small tape cassette, and the third and fourth loading pins are fixed on the upper deck and support a large tape cassette.

Also, auxiliary loading pins for supporting the front portion of a tape cassette may further be provided on the upper deck.

Preferably, the first deck is a lower deck and the second deck is an upper deck.

For a better understanding of the invention, and to show how embodiments of the same may be carried into effect, reference will now be made, by way of example, to the accompanying diagrammatic drawings, in which:
Figure 1 is a schematic perspective view showing a tape cassette loading mechanism according to an embodiment of the present invention;
Figure 2 is an exploded perspective view showing the essential parts of Figure 1 extracted;
Figure 3 is a plan view showing the state of the apparatus with a small tape cassette loaded;
Figure 4 is a schematic sectional side view of Figure 3;
Figure 5 is a plan view showing the state of the apparatus with a large tape cassette loaded; and
Figure 6 is a schematic sectional side view of Figure 5.

A preferred embodiment according to the present invention will be described in detail with reference to the attached drawings.

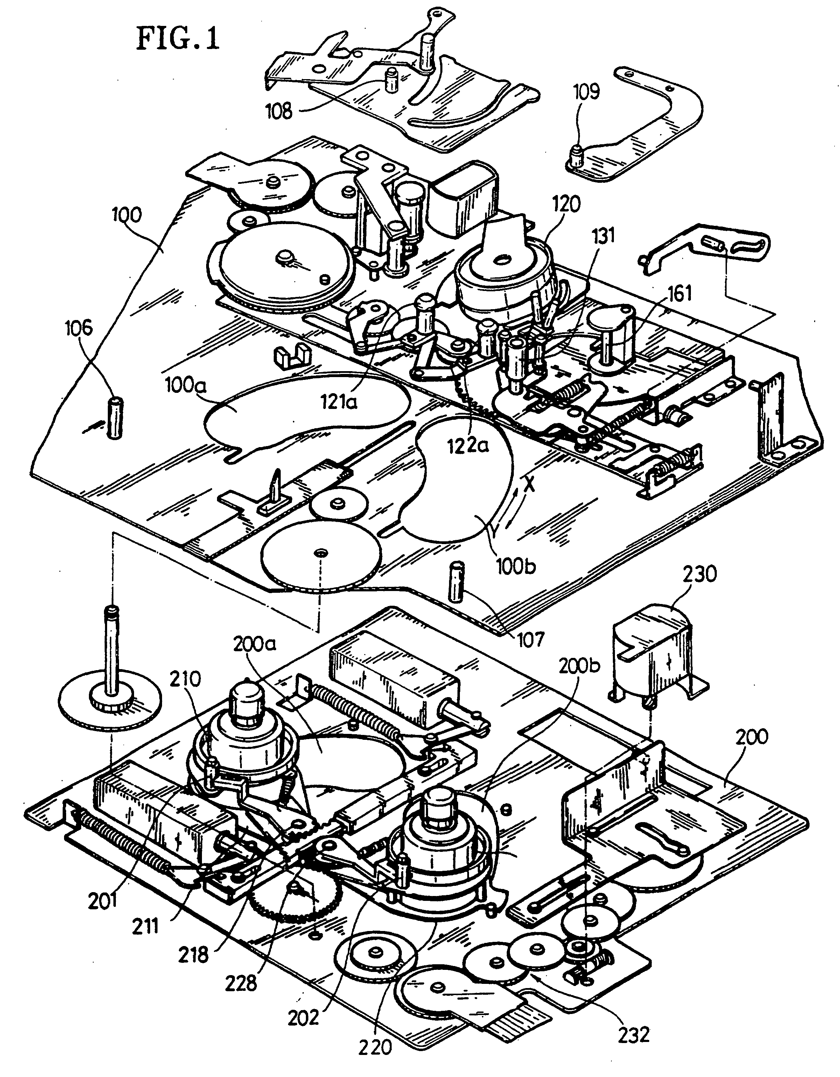

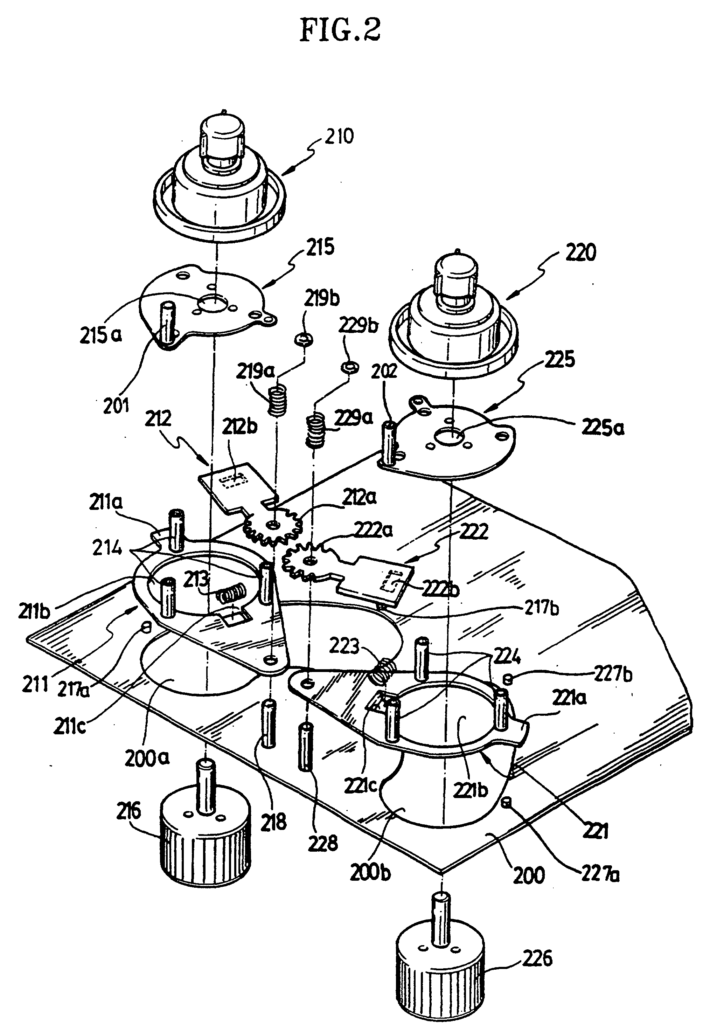

Referring to Figures 1 and 2, first and second arc-shaped holes 200a and 200b are formed on a first, lower, deck 200, and first and second fixed pins 218 and 228 separated from each other by a predetermined distance are fixedly installed between the holes 200a and 200b. A second, upper, deck 100 is installed above the lower deck 200 such that the two decks are separated from each other by a predetermined distance.

A head drum 120 and predetermined guide devices for guiding a tape (not shown) are installed on the upper deck 100. The guide devices include guide rollers 121a and 122a respectively installed on a pair of pole bases, a pinch roller 131 and a capstan motor pin 161 for pressing and transferring the tape.

Also, rotating arms 211 and 221 are rotatably coupled to the first and second fixed pins 218 and 228 on the lower deck 200. Driving arms 212 and 222 each having geared portions 212a and 222a are also rotatably coupled to the first and second fixed pins 218 and 228 wherein the geared portions 212a and 222a are engaged with each other. The driving arms 212 and 222 are elastically biased toward the rotating arms 211 and 221, respectively, via springs 219a and 229a and washers 219b and 229b.

Also, a driving motor 230 for generating a driving force is installed at one side of the lower deck 200. The driving force is transmitted to the gear portion 222a from the driving motor 230 via a gear train 232.

A connecting means for connecting the driving arms 212 and 222 and the rotating arms 211 and 221 is provided so that the power of the driving motor 230 can be transmitted to the respective rotating arms 211 and 221. The connecting means includes: cavities 212b and 222b formed on the respective lower surfaces of the driving arms 212 and 222; indented portions 211c and 221c formed on the respective rotating arms 211 and 221 corresponding to the cavities 212b and 222b; and coil springs 213 and 223 disposed between the cavities 212b and 222b and indented portions 211c and 221c, respectively. That is, the coil springs 213 and 223 are disposed halfway in cavities 212b and 222b, respectively, and halfway in indented portions 211c and 221c, respectively. Thus, the driving motor 230 transmits power to the rotating arms 211 and 221 via the coil springs 213 and 223.

Here, reel tables 210 and 220 and motors 216 and 226 for rotation thereof are installed on rotating arms 211 and 221, respectively. In more detail, coupling holes 211b and 221b to which the motors 216 and 226 are coupled are formed on each rotating arm 211 and 221. Plates 215 and 225 having holes 215a and 225a are fixedly installed at the rotating arms 211 and 221, being supported above the coupling holes 211b and 221b by a plurality of supports 214 and 224. The rotors of motors 216 and 226 connect tightly to the reel tables 210 and 220 through the holes 214a and 225a of the plates 215 and 225.

Meanwhile, preventing means for preventing the excess rotation of the rotating arms 211 and 221 is further provided constituted by protrusions 211a and 221a formed at the outer ends of the rotating arms 211 and 221, and stoppers 217a, 217b, 227a and 227b formed on the lower deck 200 for limiting the rotation of the rotating arms 211 and 221. Here, the stoppers 217a, 217b, 227a and 227b can be formed at predetermined positions along the rotating course of the protrusions 211a and 221a.

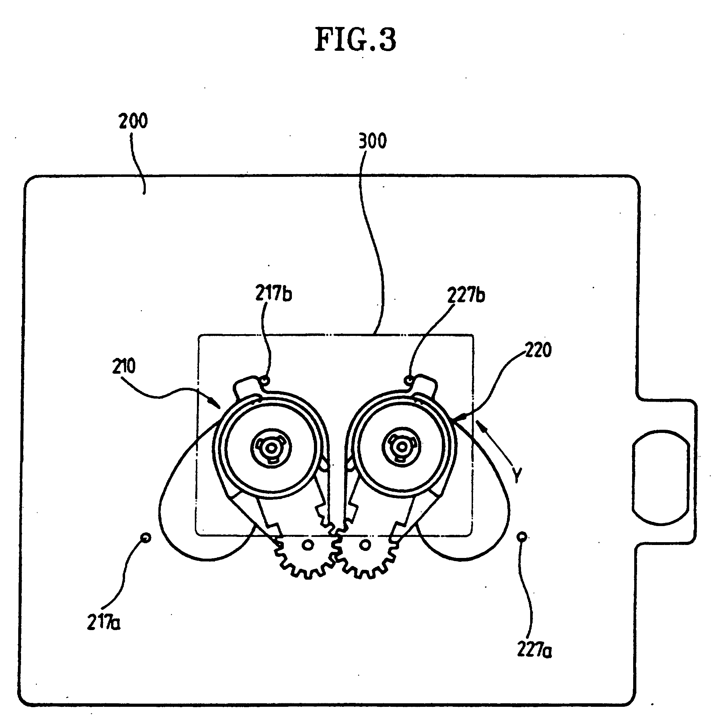

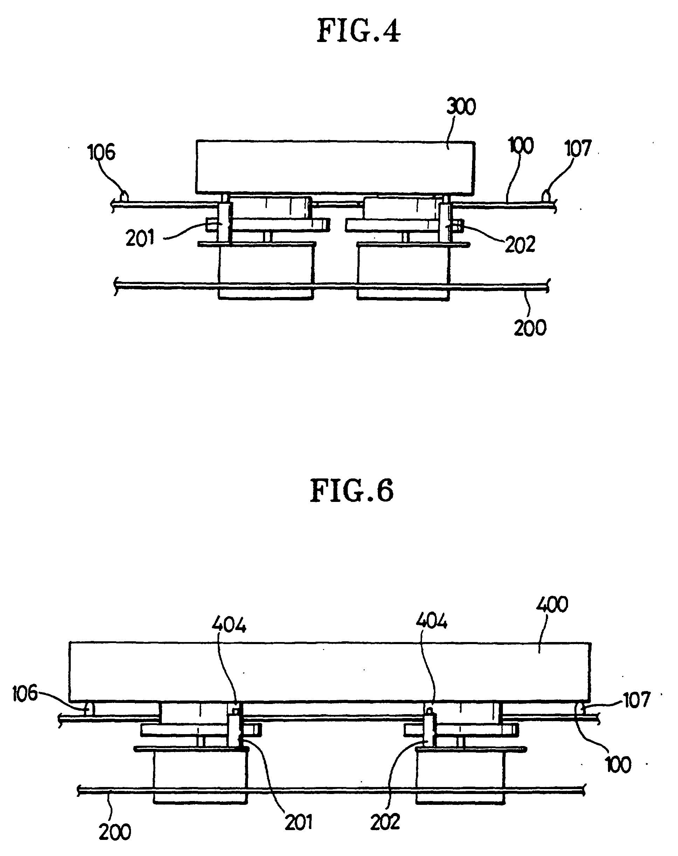

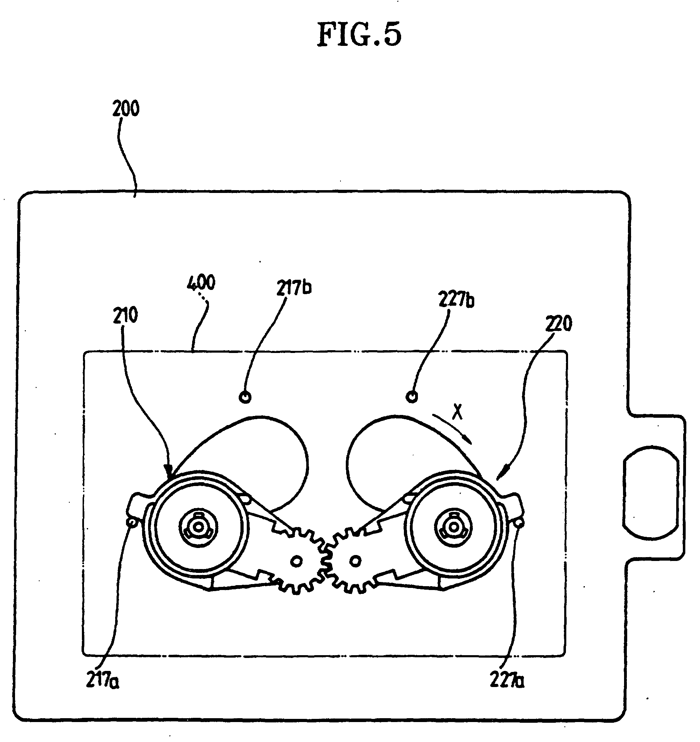

Also, as a characteristic component of the mechanism, supporting means for supporting different-sized tape cassettes is further provided. The supporting means includes first and second loading pins 201 and 202 fixed on the plates 215 and 225, respectively, and third and fourth loading pins 106 and 107 are fixed at the sides on the upper deck 100 such that the first and second loading pins 201 and 202 and third and fourth loading pins 106 and 107 selectively support different-sized tape cassettes. That is, as shown in Figures 3 and 4, the first and second loading pins 201 and 202 support from the bottom the back end of a small tape cassette 300 seated on the reel tables 210 and 220. At this time, the third and fourth loading pins 106 and 107 do not interfere with the small tape cassette 300. Figures 5 and 6 show the third and fourth loading pins 106 and 107 supporting the lower edge portions of a large tape cassette 400. At this time, the first and second loading pins 201 and 202 are positioned at the reel portion. Here, as shown in Figure 6, a clearance 404 is formed between the cassette 400 and first and second loading pins 201 and 202 so that the pins 201 and 202 do not interfere with the large tape cassette 400. In another embodiment, the first and second loading pins 201 and 202 can be formed so that the first and second loading pins 201 and 202 support the large tape cassette 400 in addition to the third and fourth loading pins 106 and 107.

Meanwhile, auxiliary loading pins 108 and 109 are installed on the upper deck 100 to further the front portion of the small tape cassette 300 from the bottom thereof. Here, when the upper and lower decks 100 and 200 are combined, only the reel tables 210 and 220 and the first and second loading pins 201 and 202 pass through the third and fourth holes 100a and 100b to the upper deck 100.

The tape cassette loading mechanism according to the present invention having such a configuration has the following functional effects.

When a large tape cassette is loaded, the distance between the reel tables 210 and 220 is controlled as follows. First, when the driving motor 230 is driven so that the last gear of gear train 232 engaged with the gear portion 222a of the driving arm 222 rotates counterclockwise, the two engaged rotating arms 211 and .221 rotate along the direction of arrow X of the third and fourth holes 100a and 100b. At this time, the protrusions 211a and 221a of the rotating arms 211 and 221 contact the stoppers 217a and 227a. The driving arms 212 and 222 are rotated slightly further as the driving arms 212 and 222 press against the coil springs 213 and 223 by the power of the driving motor 230. At this time, the rotating arms 211 and 221 adhere tightly against the stoppers 217a and 227a due to the restoring forces of the springs 213 and 223. Thus, the reel tables 210 and 220 are stably at rest at their final position. At this time, the large tape cassette 400, as shown in Figures 5 and 6, is stably supported by the third and fourth loading pins 106 and 107. Thus, when the large tape cassette 400 is loaded on the reel tables 210 and 220, the first and second loading pins 201 and 202 are positioned under the tape cassette 400 having a clearance therefrom to thereby not interfere during loading of the tape cassette 400 on the reel tables 210 and 220.

When a small tape cassette is loaded, as shown in FIGS 3 and 4, the distance between the reel tables 210 and 220 is controlled as follows. When the driving motor 230 is driven so that the final gear of the gear train 232 which is engaged with the gear portion 222a of the driving arm 222 rotates clockwise, the two engaged rotating arms 211 and 221 rotate in the direction of arrow Y along the third and fourth holes 100a and 100b. At this time, the protrusions 211a and 221a of the rotating arms 211 and 221 make contact with the stoppers 217b and 227b. The driving arms 212 and 222 are further rotated by the power of the driving motor 230 depressing the coil springs 213 and 223. Here, the rotating arms 211 and 221 adhere closely to the respective stoppers 217b and 227b due to the restoring force of the springs 213 and 223. Thus, the reel tables 210 and 220 are stably at rest at their final position. Here, the small tape cassette can be seated on the two reel tables 210 and 220 which are separated by a small distance therebetween. The first and second loading pins 201 and 202 support the small tape cassette 300 loaded on the reel tables 210 and 220 from the bottom, and the first and second loading pins 201 and 202 support the head portion. Here, the third and fourth loading pins 106 and 107 do not interfere with the small tape cassette 300.

As described above, in the mechanism according to embodiments of the present invention, the different-sized tape cassettes 300 and 400 can be loaded onto the reel tables 210 and 220 and stably supported selectively by the first and second loading pins 201 and 202 moving with the reel tables 210 and 220, and the third and fourth loading pins 106 and 107 fixed onto the upper deck 100.

## Claims

1. A tape cassette loading mechanism in a magnetic recording/reproducing apparatus, comprising:
a first deck (200) having first and second fixed pins (218, 228) mounted thereon, wherein said pins are separated by a predetermined distance; and
a second deck (100) which includes:
a head drum (120) having a magnetic head and a guiding device for guiding a magnetic tape; and
a pair of driving arms (212, 222) rotatably combined with said first and second fixed pins (218, 228) each having geared portions (212a, 222a) that are engaged to one another;
the mechanism being **characterised in that** said first deck (200) includes first and second arc-shaped holes (200a, 200b), said second deck (100) has third and fourth arc-shaped holes (100a, 100b) corresponding to the first and second holes (200a, 200b) formed therein and there is provided a pair of rotating arms (211, 221) rotatably installed on said first and second fixed pins (218, 228), respectively, for supporting reel tables (210, 220) on which different-sized tape cassettes are respectively loaded;
a driving motor (230) connected to one of said geared portions (221a, 222a) of said driving arms (212, 222); connecting means (211c, 221c, 212b, 222b, 213, 223) for connecting said driving arms (212, 222) and rotating arms (211, 221) to transmit the power from said driving motor (230) to said respective rotating arms (211, 221) via said driving arms; and
supporting means (106, 107, 108, 109, 201, 202) for supporting different-sized tape cassettes loaded on the reel tables.

2. A tape cassette loading mechanism in a magnetic recording/reproducing apparatus as claimed in claim 1, wherein motors (216, 226) for rotating the respective reel tables are installed on each of said rotating arms (211, 221), respectively.

3. A tape cassette loading mechanism in a magnetic recording/reproducing apparatus as claimed in claim 1, or 2, wherein said connecting means includes:
cavities (212b, 222b) respectively formed on the bottom of said driving arms (212, 222);
indented portions (211c, 221c) formed on the top portions of said rotating arms (211, 221) corresponding to said cavities (212b, 222b); and
coil springs (213, 223) disposed between said cavities (212b, 222b) and said indented portions (211c, 221c), respectively.

4. A tape cassette loading mechanism in a magnetic recording/reproducing apparatus as claimed in claim 1, 2 or 3, further comprising preventing means for preventing excess rotation of said rotating arms (211, 221).

5. A tape cassette loading mechanism in a magnetic recording/reproducing apparatus as claimed in claim 4, wherein said preventing means includes:
protrusions formed on said rotating arms (211a, 221a), respectively; and
stoppers (217a, 217b, 227a, 227b) formed on said first deck (200).

6. A tape cassette loading mechanism in a magnetic recording/reproducing apparatus as claimed in any of the preceding claims, wherein said supporting means includes:
first and second loading pins (201, 202) associated with said rotating arms (211, 221), respectively; and
third and fourth loading pins (106, 107) respectively on sides of said second deck (100), such that said first and second and third and fourth loading pins support different-sized tape cassettes, respectively.

7. A tape cassette loading mechanism in a magnetic recording/reproducing apparatus according to claim 6, wherein the first and second loading pins (201, 202) are rotated with the rotating arms (211, 221) and support a small tape cassette, and the third and fourth loading pins (106, 107) are fixed on the second deck (100) and support a large tape cassette.

8. A tape cassette loading mechanism in a magnetic recording/reproducing apparatus as claimed in claim 6 or 7, further comprising auxiliary loading pins (108, 109) for supporting the front portion of a tape cassette.

9. A tape cassette loading mechanism in a magnetic recording/reproducing apparatus according to any of the preceding claims, wherein the first deck (200) is a lower deck and the second deck (100) is an upper deck.

## Patentansprüche

1. Bandkassetten-Einlegemechanismus in einer Magnet-Aufzeichnunge-/Wiedergabevorrichtung, der umfasst:
ein erstes Lauftwerk (200), an dem ein erster und ein zweiter stationärer Zapfen (218, 228) angebracht sind, wobei die Zapfen um einen vorgegebenen Abstand voneinander getrennt sind; und
ein zweites Laufwerk (100), das enthält:
eine Bandführungstrommel (120), die einen Magnetkopf und eine Führungsvorrichtung zum Führen eines Magnetbandes aufweist; und
ein Paar Antriebsarme (212, 222), die drehbar mit dem ersten und dem zweiten stationären Zapfen (218, 228) verbunden sind und jeweils mit Zähnen versehene Abschnitte (212a, 222a) aufweisen, die miteinander In Eingriff sind;
wobei der Mechanismus **dadurch gekennzeichnet ist, dass** das erste Laufwerk (200) ein erstes und ein zweites kreisbogenförmiges Loch (200a, 200b) enthält, in dem zweiten Laufwerk (100) ein drittes und ein viertes kreisbogenförmiges Loch (100a, 100b) ausgebildet sind, die dem ersten und dem zweiten Loch (200a, 200b) entsprechen, und ein Paar Dreharme (211, 221) vorhanden ist, die drehbar an dem ersten bzw. dem zweiten stationären Zapfen (218, 228) installiert sind und Spulenschelben (210, 220) tragen, auf die jeweils unterschiedlich große Bandkassetten aufgelegt werden;
einen Antriebsmotor (230), der mit einem der mit Zähnen versehenen Abschnitte (221a, 222a) der Antriebsarme (212, 222) verbunden ist;
Verbindungseinrichtungen (211c, 221c, 212b, 222b, 213, 223), die die Antriebsarme (212, 222) und die Dreharme (211, 221) verbinden und die Kraft von dem Antriebsmotor (230) auf die entsprechenden Dreharme (211, 221) Ober die Antriebsarme übertragen; und
Trageeinrichtumgen (106, 107, 108, 109, 201, 202), die unterschiedlich große Bandkassetten tragen, die auf die Spulenscheiben aufgelegt werden.

2. Bandkassetten-Einlegemechanismus in einer Magnet-Aufzeichnungs-/Wiedergabevorrichtung nach Anspruch 1, wobei Motoren (216, 226), die die entsprechenden Spulenscheiben drehen, jewells an jedem der Dreharme (211, 221) angebracht sind.

3. Bandkassetten-Einlegemechanismus In einer Magnet-Aufzelchnungs-/Wiedergabevorrichtung nach Anspruch 1 oder 2, wobei die Verbindungseinrichtungen enthalten:
Hohiräume (212b, 222b), die jeweils am unteren Ende der Antriebsarme (212, 222) ausgebildet sind;
vertiefte Abschnitte (211c, 221c), die an den oberen Abschnitten der Dreharme (211, 221) entsprechend den Hohiräumen (212b, 222b) ausgebildet sind; und
Schraubenfedern (213, 223), die jeweils zwischen den Hohiräumen (212b, 222b) und den vertieften Abschnitten (211c, 221c) angeordnet sind.

4. Bandkassetten-Einlegemechanismus in einer Magnet-Aufzeichnungs-/Wiedergabevorrichtung nach Anspruch 1,2 oder 3, der des Weiteren Verhinderungseinrichtungen umfasst, die übermäßige Drehung der Dreharme (211, 221) verhindern.

5. Bandkassetten-Einlegemechanismus in einer Magnet-Aufzelchnungs-/Wiedergabevorrichtung nach Anspruch 4, wobei die Verhinderungseinrichtungen enthalten:
Vorsprünge, die jeweils an den Dreharmen (211a, 221a) ausgebildet sind; und
Anschläge (217a, 217b, 227a, 227b), die en dem ersten Laufwerk (200) ausgebildet sind.

6. Bandkassetten-Einlegemechanismus in einer Magnet-Aufzeichnungs-/Wiedergabevorrichtung nach einem der vorangehenden Ansprüche, wobei die Tregeeinrichtungen enthalten:
einen ersten und einen zweiten Einlegezapfen (201, 202), die jeweils mit den Dreharmen (211, 221) verbunden sind; and
einen dritten und einen vierten Elniegezapfen (108, 107) jeweils en Selten des zweiten Laufwerks (100), wobei der erste und der zweite sowie der dritte und der vierte Einlegezapfen jeweils unterschiedliche Bandkassetten tragen.

7. Bandkassetten-Einlegemechanismus in einer Magnet-Aufzeichnungs-/Wiedergabevorrichtung nach Anspruch 8, wobei der erste und der zweite Einlegezapfen (201, 202) mit den Dreharmen (211,221) gedreht werden und eine kleine Bandkassette tragen und der dritte sowie der vierte Einlegezapfen (106,107) auf dem zweiten Laufwerk (100) befestigt sind und eine große Bandkassette tragen.

8. Bandkassetten-Einlegemechanismus in einer Magnet-Aufzeichnungs-/Wiedergabevorrichtung nach Anspruch 6 oder 7, der des Weiteren zusätzliche Einlegezapfen (108, 109) umfasst, die den vorderen Abschnitt einer Bandkassette tragen.

9. Bandkassetten-Einlegemachanismus in einer Magnet-Aufzeichnungs-/Wiedergabevorrichtung nach einem der vorangehenden Ansprüche, wobei das erste Laufwerk (200) ein unteres Laufwerk ist und das zweite Laufwerk (100) ein oberes Laufwerk ist.

## Revendications

1. Mécanisme de chargement de cassette à bande dans un dispositif d'enregistrement/lecture magnétique, comportant :
une première platine (200) ayant des première et deuxième tiges fixées (218, 228) montées dessus, lesdites tiges étant séparées par une distance prédéterminée, et
une seconde platine (100) qui inclut :
un tambour à tête (120) ayant une tête magnétique et un dispositif de guidage pour guider une bande magnétique, et
une paire de bras d'entraînement (212, 222) combinés d'une manière rotative avec lesdites première et deuxième tiges fixées (218, 228) ayant chacun des parties munies d'engrenages (212a, 222a) qui engrènent mutuellement,
le mécanisme étant **caractérisé en ce que** ladite première platine (200) inclut des premier et deuxième trous (200a, 200b) de forme arquée, ladite seconds platine (100) a des troisième et quatrième trous (100a, 100b) de forme arquée correspondant aux premier et deuxième trous (200a, 200b) formés dedans et **en ce qu'**il est prévu une paire de bras rotatifs (211, 221) montés d'une manière rotative sur lesdites première et deuxième tiges fixées (218, 228), respectivement, pour supporter des tables à bobines (210, 220) sur lesquelles des cassettes à bande de dimensions différentes sont respectivement chargées,
un moteur d'entraînement (230) relié à l'une desdites parties munies d'engrenages (221a, 222a) desdits bras d'entraînement (212, 222),
des moyens de liaison (211c, 221c, 212b, 222b, 213, 223) pour relier lesdits bras d'entraînement (212, 222) et les bras rotatifs (211, 221) afin de transmettre la puissance fournie par ledit moteur d'entraînement (230) auxdits bras rotatifs (211, 221) respectifs via lesdits bras d'entraînement, et
des moyens de support (106, 107, 108, 109, 201, 202) pour supporter les cassettes à bande de dimensions différentes chargées sur les tables à bobines.

2. Mécanisme de chargement de cassette à bande dans un dispositif d'enregistrement/lecture magnétique selon la revendication 1, dans lequel des moteurs (216, 226) destinés à entraîner en rotation les tables à bobines respectives sont installés sur chacun desdits bras rotatifs (211, 221), respectivement.

3. Mécanisme de chargement de cassette à bande dans un dispositif d'enregistrement/lecture magnétique selon la revendication 1 ou 2, dans lequel lesdits moyens de liaison incluent :
des cavités (212b, 222b) formées respectivement sur la partie inférieure desdits bras d'entraînement (212, 222),
des parties dentées (211c, 221c) formées sur les parties supérieures desdits bras rotatifs (211, 221) correspondant auxdites cavités (212b, 222b), et
des ressorts hélicoïdaux (213, 223) disposés entre lesdites cavités (212b, 222b) et lesdites parties dentées (211c, 221c), respectivement.

4. Mécanisme de chargement de cassette à bande dans un dispositif d'enregistrement/lecture magnétique selon la revendication 1, 2 ou 3, comportant en outre des moyens de blocage pour empêcher une rotation excessive desdits bras rotatifs (211, 221).

5. Mécanisme de chargement de cassette à bande dans un dispositif d'enregistrement/lecture magnétique selon la revendication 4, dans lequel lesdits moyens de blocage incluent :
des protubérances formées sur lesdits bras rotatifs (211a, 221a), respectivement, et
des butées (217a, 217b, 227a, 227b) formées sur ledit premier tablier (200).

6. Mécanisme de chargement de cassette à bande dans un dispositif d'enregistrement/lecture magnétique selon l'une quelconque des revendications précédentes, dans lequel lesdits moyens de support incluent :
des première et deuxième tiges de chargement (201, 202) associées auxdits bras rotatifs (211, 221), respectivement, et
des troisième et quatrième tiges de chargement (106, 107) respectivement sur les côtés dudit second tablier (100), de sorte que lesdites première et deuxième et troisième et quatrième tiges de chargement supportent des cassettes à bande de dimensions différentes, respectivement.

7. Mécanisme de chargement de cassette à bande dans un dispositif d'enregistrement/lecture magnétique selon la revendication 6, dans lequel les première et deuxième tiges de chargement (201, 202) sont entraînées en rotation par les bras rotatifs (211, 221) et supportent une cassette à bande de petites dimensions, et les troisième et quatrième tiges de chargement (106, 107) sont fixées sur la seconde platine (100) et supportent une cassette à bande de dimensions importantes.

8. Mécanisme de chargement de cassette à bande dans un dispositif d'enregistrement/lecture magnétique selon la revendication 6 ou 7, comportant en outre des tiges de chargement auxiliaires (108, 109) pour supporter la partie avant d'une cassette à bande.

9. Mécanisme de chargement de cassette à bande dans un dispositif d'enregistrement/lecture magnétique selon l'une quelconque des revendications précédentes, dans lequel la première platine (200) est une platine inférieure et la seconde platine (100) est une platine supérieure.
